# FASCICULE DE BREVET EUROPEEN

(11) **EP 0 954 982 B1**
(45) Date de publication et mention de la délivrance du brevet: **09.07.2003**
(21) Numéro de dépôt: 99401124.5
(22) Date de dépôt: 07.05.1999
(51) Int. Cl.: A23L 1/236, A23G 3/00

(54) **Composition édulcorante et ses utilisations**
Süssmittelzusammensetzung und Verwendung
Sweetening composition and its uses

(30) Priorité: 07.05.1998 FR 9805806
(43) Date de publication de la demande: 10.11.1999
(73) Titulaire: Roquette Frères, 62136 Lestrem (FR)
(72) Inventeur: Ribadeau-Dumas, Guillaume, 59237 Verlinghem (FR); Fouache, Catherine, 62113 Sailly Labourse (FR); Duflot, Pierrick, 62136 Lacouture (FR)
(74) Mandataire: Boulinguiez, Didier

(56) Documents cités:
- WO-A-93/05663
- WO-A-95/26645
- WO-A-97/01962
- FR-A- 2 502 495
- US-A- 3 476 571

## Description

La présente invention concerne une nouvelle composition édulcorante.

Elle concerne encore l'utilisation de cette composition édulcorante pour la fabrication de sucres cuits, en particulier de sucres cuits nus, c'est-à-dire commercialisés sans emballages individuels et en tant que support d'arôme.

Les sucres cuits, appelés aussi communément bonbons durs, sont des produits de confiserie solides et essentiellement amorphes. Ils sont obtenus par déshydratation poussée de sirops de carbohydrates. Généralement, on procède à la cuisson de mélanges de saccharose pulvérulent et de sirops concentrés d'hydrolysats d'amidon, dans des proportions variant d'environ 40/60 à environ 65/35 en poids commercial. Ces mélanges contiennent d'ordinaire de l'eau en quantité suffisante pour dissoudre l'ensemble des cristaux de saccharose. On cuit ensuite ces mélanges jusqu'à 130-150°C à pression ambiante pour évaporer l'essentiel de l'eau, puis on termine la cuisson sous vide pour abaisser davantage encore la teneur en eau et l'amener à une valeur généralement inférieure à 3%. On refroidit ensuite la masse plastique ainsi obtenue, jusqu'à atteindre une température comprise entre 125 et 140°C dans le cas d'un procédé de coulage en moules, ou une température comprise entre 90 et 115°C dans le cas d'un procédé de formage sur rouleaux ou d'extrusion. A ce stade, on ajoute alors différentes substances telles qu'arômes, colorants, acides, extraits de plantes, vitamines, principes actifs pharmaceutiques. On obtient après formage ou coulage de la masse cuite et après retour à température ambiante, des sucres cuits présentant une texture et une apparence semblables à celles d'un verre.

Le marché essentiel des sucres cuits est toujours aujourd'hui constitué de produits dits "de sucre" préparés à partir de sirops de carbohydrates non hydrogénés. Il existe aussi des sucres cuits essentiellement amorphes dits "sans sucre" ou aux polyols , obtenus de manière identique à celle décrite ci-dessus, mais en employant des sirops de carbohydrates hydrogénés et en procédant à une cuisson à une température plus élevée, afin de déshydrater davantage encore la masse cuite. Ces sirops de carbohydrates sont généralement des sirops de maltitol ou d'isomaltulose hydrogéné en solution.

On demande aux sucres cuits d'être stables au cours du temps, c'est-à-dire d'évoluer le moins possible depuis le moment où ils sont fabriqués jusqu'au moment où ils sont consommés, et cela pour rester des produits attrayants et agréables en bouche.

Or, les sucres cuits ne sont malheureusement pas des produits stables du point de vue thermodynamique. L'importance de leur évolution dépend essentiellement de leurs compositions après fabrication mais aussi des conditions dans lesquelles ils sont conservés.

En premier lieu, les sucres cuits peuvent devenir des produits collants lors du stockage. Lorsqu'ils sont papillotés, il devient difficile, voire impossible, d'éliminer leurs papiers d'emballage avant de les consommer. Ils peuvent aussi prendre en masse sans rester individualisés, ce qui est encore plus gênant.

On explique cette évolution problématique vers un état collant et sirupeux, par des phénomènes de surface et / ou par des phénomènes en profondeur.

Les phénomènes de surface trouvent leur origine dans le caractère hygroscopique des sucres cuits. On sait en effet que les sucres cuits, produits presque anhydres par essence, présentent des humidités relatives d'équilibre toujours très basses, nettement inférieures aux humidités relatives ambiantes habituelles de stockage. Ceci explique qu'une reprise en eau a forcément lieu à la surface des bonbons dès qu'ils sont et restent exposés à l'air, comme c'est le cas des sucettes par exemple. Lorsque cette reprise en eau est suffisamment importante, elle tend à liquéfier la surface des bonbons et à leur communiquer les caractéristiques d'un sirop, c'est-à-dire en particulier à leur communiquer un caractère collant. Cette évolution apparaît d'autant plus rapidement que les sucres cuits présentent une teneur basse en eau.

Les phénomènes en profondeur, qui ne concernent donc pas uniquement la surface mais la totalité de la masse des bonbons, ont une origine thermique. Plus précisément, il convient, pour que ces phénomènes aient lieu, que la température de stockage dépasse quelque peu la température de transition vitreuse du sucre cuit. Cette notion à laquelle on se réfère ici est largement décrite dans l'excellent article "La transition vitreuse : incidences en technologie alimentaire" de M. Le Mestre et D. Simatos, publié dans I.A.A. de Janvier / Février, 1990. La température de transition vitreuse est la température à laquelle, par chauffage, un sucre cuit vitreux et solide devient un liquide sirupeux amorphe. On comprend très bien qu'un sucre cuit puisse être sujet à une déformation, voire à un écoulement complet, lorsque sa température de conservation est élevée et sa température de transition vitreuse plutôt basse. Le produit initialement sec au toucher devient collant. Il convient de noter que plus le sucre cuit est riche en eau, plus il est sujet à un risque d'évolution de cette nature durant sa conservation.

En conclusion, pour éviter que les sucres cuits ne deviennent des produits collants au stockage, il est toujours apparu nécessaire que leur teneur en eau ne soit ni trop faible, ni trop forte.

En second lieu, les sucres cuits peuvent avoir tendance lors du stockage à cristalliser de manière incontrôlée et, de ce fait, perdre leur aspect vitreux très attrayant, en ressemblant alors davantage à des sucres d'orge qui, comme on le sait, sont très différents des produits de confiserie auxquels on s'intéresse dans le cadre de la présente invention. Cette cristallisation peut avoir lieu seulement en surface du bonbon ou bien également au coeur du bonbon.

La cristallisation de surface nécessite inéluctablement une reprise en eau significative et correspondant à un stade d'évolution complémentaire par rapport à celui décrit plus haut. Elle nécessite également une concentration suffisante en molécules cristallisables, en général des molécules de saccharose, dans la couche périphérique liquéfiée. Lorsque ces deux conditions sont réunies, on observe alors une cristallisation, qui s'opère depuis la surface du bonbon vers son centre. Ce phénomène, lorsqu'il est incontrôlé, est connu sous le nom de tournage. Il rend les bonbons totalement opaques et blancs.

La cristallisation peut avoir lieu aussi très directement au coeur du sucre cuit si celui-ci est très riche en eau ou si la température de stockage est trop élevée. Dans ces conditions, le sucre cuit présente alors une mollesse excessive et ne peut plus être considéré comme un véritable solide. Il s'agit alors plutôt d'un liquide sursaturé en molécules cristallisables dont l'évolution vers un état cristallin est inéluctable et quasiment spontanée. Les spécialistes dénomment ce type de cristallisation sous le terme de grainage.

En définitive, pour que les sucres cuits ne soient pas instables et ne deviennent au cours du temps des produits collants ou bien des produits tournés ou grainés, il a toujours semblé impératif d'ajuster d'une part leur teneur en eau et, d'autre part, leur teneur en molécules cristallisables, c'est-à-dire généralement leur teneur en saccharose.

A l'issue de leur fabrication, les sucres cuits obtenus sont soit papillotés individuellement avant leur mise en sachets, soit mis directement en sachets ou dans des boîtes cartonnées sans emballages individuels. Dans ce dernier cas, les sucres cuits sont dits nus, c'est-à-dire sans emballages individuels.

Quatre solutions existent à l'heure actuelle pour pouvoir réaliser des sucres cuits suffisamment stables à l'humidité et à la chaleur pour pouvoir être commercialisés nus.

La première consiste à réaliser des bonbons à base de sirop d'hydrolysats d'amidon hydrogénés et d'isomalt. Pour être commercialisés sans emballages individuels, les sucres cuits doivent contenir, sur sec, plus de 80% en poids d'isomalt. Ces bonbons ont été décrits notamment par le Leatherhead Food R.A. dans son rapport n° 652, page 11, de juin 1989 (auteurs : G.A. Hammond et J.B. Hudson). L'association de ces deux produits a, certes, permis de limiter la reprise en eau des bonbons obtenus, notamment du fait du caractère faiblement hygroscopique de l'isomalt, mais a entraîné une augmentation importante du prix de revient du bonbon et une perte très sensible en pouvoir sucrant. L'isomalt est en effet un produit onéreux, et de ce fait, convient mal comme agent de charge de produits fabriqués en grandes quantités. Par ailleurs, ce carbohydrate contient 5% d'eau de cristallisation et nécessite donc des températures de cuisson élevées pour permettre une déshydratation suffisante du sirop pour l'obtention d'un sucre cuit de qualité. Enfin, les sucres cuits à base d'isomalt ont tendance à grainer au cours du temps.

La deuxième solution consiste à réaliser des bonbons à base de sorbitol. Ce polyol permet la réalisation de sucres cuits qui demeurent stables vis-à-vis de l'humidité grâce à une microcristallisation du polyol dans la masse et en surface. Cette microcristallisation n'est pas visible à l'oeil nu et le sucre cuit est translucide aussitôt après sa fabrication. Cependant, au cours du temps, il a tendance à blanchir en surface, ce qui diminue son attrait.

La troisième solution consiste à givrer le sucre cuit. Le givrage consiste à appliquer en surface du sucre cuit un sirop cristallisable, le plus souvent de saccharose. La cristallisation du saccharose en surface du sucre cuit crée ainsi une barrière aux échanges aqueux. Cependant, le givrage enlève le critère de translucidité au sucre cuit givré.

La quatrième solution consiste à fabriquer des sucres cuits à très haute teneur en saccharose (supérieure à 70% en poids, sur sec). Mais, le principal défaut de ces bonbons est de blanchir très rapidement en surface. Ils deviennent alors opaques.

Une alternative serait de fournir une composition de carbohydrates particulière qui permette d'obtenir un sucre cuit sans sucre stable à l'humidité et à la chaleur et n'ayant pas tendance, au cours du temps, à devenir opaque et blanc en surface ou à coeur. Plusieurs compositions ont été ainsi proposées. Par exemple, le document WO-A-95/26645 décrit une composition édulcorante comprenant essentiellement du lactitol, du polydextrose et un édulcorant intense. Lorsqu'une telle composition est mise en oeuvre pour la fabrication de sucres cuits sans sucre, ces derniers ne sont pas stables sans emballages individuels. Cette composition ne peut donc pas convenir pour la fabrication de sucres cuits nus.

Dans le document US-A-5.236.719, une dextrine dont les composés de bas poids moléculaire ont été éliminés par chromatographie, et commercialisée sous la marque FIBERSOL G, est utilisée en association avec du xylitol, du sorbitol ou du maltitol, dans la fabrication de sucres cuits. Cependant, les polyols associés à la dextrine étant très solubles, ils ne cristallisent pas à la surface du sucre cuit. Au contraire dès que les sucres cuits à base de cette composition sont au contact avec l'atmosphère, ils ont tendance à reprendre de l'eau et à devenir collants. Par conséquent, les sucres cuits obtenus à partir d'une telle composition doivent impérativement être emballés individuellement pour limiter cette reprise en eau.

L'invention a pour but de remédier aux inconvénients de l'art antérieur et de proposer une nouvelle composition édulcorante, notamment pour sucres cuits ou pour une utilisation en tant que support d'arôme, répondant nettement mieux que les compositions existantes aux attentes des confiseurs et aux différentes exigences de la pratique, c'est-à-dire possédant une stabilité sensiblement améliorée au stockage.

A l'issue de recherches approfondies, la société demanderesse a eu le mérite de trouver que ce but pouvait être atteint et que, contre toute attente, il était possible de préparer un sucre cuit stable, en particulier non papilloté, lorsqu'il était préparé à partir d'une composition édulcorante amorphe conforme à la présente invention.

Le sucre cuit ainsi obtenu peut être qualifié de stable dans la mesure où, au cours du temps et sans emballage individuel, il n'a pas tendance :
- ni à devenir collant,
- ni à grainer, ni à tourner en devenant opaque et blanc en surface ou à coeur,
- ni à se déformer aux températures estivales habituelles aux climats tempérés.

La société demanderesse a découvert que, de façon surprenante et inattendue, pour obtenir un sucre cuit stable, il convenait de mettre en oeuvre pour sa fabrication une composition comprenant un composé peu soluble choisi parmi les sucres et polyols, et au moins un agent anticristallisant de cedit composé.

L'invention a donc pour objet une composition édulcorante caractérisée par le fait qu'elle comprend :
(a) au moins un composé peu soluble ayant une solubilité dans l'eau inférieure à 60 g / 100 g de solution à 20°C, choisi dans le groupe constitué par les sucres et les polyols, seuls ou en mélange entre eux ; et
(b) au moins un agent anticristallisant comprenant une coupe d'au moins un oligosaccharide ou polysaccharide choisi dans le groupe constitué par les hydrolysats d'amidon de poids moléculaire compris entre 500 et 8000 daltons et présentant une température de transition vitreuse (Tg) inférieure à 140°C, ladite Tg étant mesurée pour une teneur en eau de 0%, et les pyrodextrines et les polyglucoses de poids moléculaire compris entre 1000 et 8000 daltons, seuls ou en mélange entre eux.

Sans vouloir être liée par une théorie, la société demanderesse pense, au terme de longs travaux de recherche, pouvoir expliquer la remarquable stabilité de la composition selon l'invention de la manière qui suit. Le composé peu soluble de la composition conforme à l'invention, c'est-à-dire le sucre ou le polyol, cristallise rapidement en surface du sucre cuit, limitant de ce fait les transferts d'eau de l'atmosphère vers le sucre cuit. Grâce à cette couche microcristallisée superficielle, le sucre cuit est donc stabilisé par rapport à l'humidité. L'agent anticristallisant apporte, lui, la stabilité vis-à-vis de la température et le critère relatif à la translucidité. Sélectionné avec précision quant à son poids moléculaire, il permet d'ajuster la température de transition vitreuse de la composition conforme à la présente invention au delà de la température ambiante, et plus particulièrement à une température de transition vitreuse supérieure à 30°C pour sa teneur effective en eau. Avec une telle température de transition vitreuse, les sucres cuits obtenus par mise en oeuvre de la composition conforme à l'invention ne se déforment pas. En combinant, dans la composition de l'invention, un composé peu soluble avec un agent anticristallisant de ce même composé, il est ainsi possible de préparer des sucres cuits nus stables.

Dans la présente invention, on entend par coupe d'au moins un oligosaccharide ou polysaccharide, la sélection d'un tel composé ayant un poids moléculaire spécifique ou ayant une plage de poids moléculaire déterminée.

L'oligosaccharide et/ou le polysaccharide peut être choisi parmi les hydrolysats d'amidon ayant un poids moléculaire compris entre 500 et 8000 daltons. Au sens de la présente invention, le terme hydrolysat d'amidon désigne tout produit ou tout mélange de produits issus de l'hydrolyse d'un amidon de toute nature, par voie chimique ou enzymatique, sous réserve qu'ils remplissent la double condition d'avoir un poids moléculaire compris entre 500 et 8000 daltons et une température de transition vitreuse (Tg) inférieure ou égale à 140°C, ladite Tg étant mesurée pour une teneur en eau de 0%, ce qui exclut par exemple les maltodextrines.

Cette coupe peut être également choisie parmi les pyrodextrines ou les polyglucoses ayant un poids moléculaire compris entre 1000 et 8000 daltons (ce qui exclut par exemple le polydextrose, produit commercialisé par la société Pfizer). Avantageusement, les pyrodextrines ou les polyglucoses mis en oeuvre dans l'invention ont un poids moléculaire compris entre 1000 et 6000, de préférence compris entre 2000 et 5000, et plus particulièrement compris entre 4000 et 5000 daltons.

Au sens de la présente invention, le terme polyglucose désigne les produits composés majoritairement de liaisons 1-6, obtenus par condensation ou réarrangement, à partir de glucose, sous l'action combinée de la chaleur et d'acides dans un milieu presque dépourvu d'eau, sous réserve qu'ils remplissent la condition d'avoir un poids moléculaire compris dans les plages mentionnées ci-dessus.

Au sens de la présente invention, on entend par pyrodextrines les produits obtenus par chauffage de l'amidon amené à un faible taux d'humidité, en présence généralement de catalyseurs acides ou basiques, sous réserve qu'ils remplissent la condition d'avoir un poids moléculaire compris dans les plages mentionnées ci-dessus. Ce grillage à sec de l'amidon, le plus couramment en présence d'acide, entraîne à la fois une dépolymérisation de l'amidon et un réarrangement des fragments d'amidon obtenus, conduisant à l'obtention de molécules très ramifiées.

Les coupes d'hydrolysats d'amidon, de pyrodextrines ou de polyglucoses peuvent être mises en oeuvre, dans la composition conforme à l'invention, seules ou en mélange entre elles.

Avantageusement, l'agent anticristallisant est hydrogéné et /ou oxydé. D'excellents résultats ont été ainsi obtenus avec, comme coupe d'hydrolysat d'amidon hydrogéné, le maltotriitol ou avec comme coupe de pyrodextrine hydrogénée, une dextrine de poids moléculaire d'environ 4500 daltons, en association avec un composé peu soluble choisi dans le groupe constitué par le tréhalose, le lactose, le mannose, le maltose, l'érythritol, le mannitol, le glucopyranosido-1, 6-mannitol et le lactitol.

Selon un mode de réalisation particulier de l'invention, le rapport pondéral agent anticristallisant / composé peu soluble est compris entre 10/90 et 90/10, de préférence compris entre 20/80 et 80/20.

D'excellents résultats ont ainsi été obtenus à partir de compositions conformes à l'invention comprenant :
- de 25 à 35% en poids sur sec de mannitol et de 65 à 75% en poids sur sec d'une coupe de dextrines hydrogénées,
- de 65 à 75% en poids sur sec de lactitol et de 25 à 35% en poids sur sec d'une coupe de dextrines hydrogénées.
- de 40 à 80% en poids sur sec de glucopyranosido-1, 6-mannitol et de 20 à 60% en poids sur sec de maltotriitol.

D'autres caractéristiques et avantages de l'invention apparaîtront à la lecture des exemples qui suivent, relatifs à l'utilisation de la composition conforme à l'invention dans la fabrication de sucres cuits. Ces exemples sont donnés à titre illustratif mais non limitatif.

### EXEMPLE 1 : incidence de la nature du composé peu soluble

Dans cet exemple, l'agent anticristallisant mis en oeuvre est une dextrine hydrogénée de poids moléculaire égal à 4500 daltons. Elle est utilisée en association avec différents polyols, selon les proportions indiquées dans le tableau 1.

**TABLEAU 1**

| ESSAI | POLYOL | % de POLYOL | % D'AGENT ANTI-CRISTALLISANT |
|---|---|---|---|
| 1 | mannitol | 30 | 70 |
| 2 | lactitol | 70 | 30 |
| 3 | maltitol | 50 | 50 |
| 4 | isomalt (témoin) | 100 | 0 |

Les essais 1 à 2 sont conformes à la présente invention. L'essai 3 est un essai comparatif utilisant un polyol n'entrant pas dans le cadre de la présente invention. L'essai 4 est l'essai témoin mettant en oeuvre 100% d'isomalt (mélange équimoléculaire de glucosido-1,6-mannitol et d'isomaltitol, obtenu par hydrogénation d'isomaltulose issu d'une transformation enzymatique du saccharose).

A partir des compositions données dans le tableau 1, on a réalisé des solutions de carbohydrates à 75% de matière sèche par dissolution dans une quantité d'eau appropriée.

Les sirops obtenus sont cuits à feu nu, à une température choisie, comprise entre 140 et 180°C.

Les sucres cuits ainsi préparés sont analysés sur le plan de leur teneur en eau et de leur température de transition vitreuse. Par ailleurs, des tests de stabilité sont réalisés en mettant les sucres cuits sans emballages individuels en microclimat à 66% d'humidité relative et à 20°C pendant 10 jours. A l'issue de cette période, les sucres cuits sont observés en notant leur déformation, leur collant et leur état de cristallisation (grainage). L'échelle de notation est la suivante :
0 : absence
+ : traces
++ : important
+++ : très important

Les résultats des tests de stabilité obtenus pour les sucres cuits fabriqués à partir des compositions décrites dans le tableau 1 sont rassemblés dans le tableau 2 qui suit.

**TABLEAU 2**

| Essai | T° de cuisson (C°) | Eau initiale (%) | Tg (C°) | Déformation | Collant | Grainage |
|---|---|---|---|---|---|---|
| 1 | 140 | 3,0 | 35,3 | 0 | 0 | ++ |
| 2 | 150 | 3,3 | 41,5 | 0 | 0 | ++ |
| 3 | 150 | 2,4 | 49,2 | + | ++ | 0/+ |
| 4 | 180 | 2,0 | 49,0 | 0 | 0 | +++ |

Les sucres cuits préparés à partir des compositions conformes à la présente invention et, notamment celle comprenant 70% de dextrines hydrogénées et 30% de mannitol à 3,0% d'eau résiduelle et celle comprenant 30% de dextrines hydrogénées et 70% de lactitol à 3,3% d'eau, ont une stabilité comparable à celle des sucres cuits préparés à partir de 100% d'isomalt. Les sucres cuits ne sont jamais collants et ne se déforment pas. Ils sont donc susceptibles d'être vendus nus, non papillotés.

Ces mêmes sucres cuits grainent moins vite que les sucres cuits à base d'isomalt.

### EXEMPLE 2 : incidence du poids moléculaire de l'agent anticristallisant

On prépare plusieurs sucres cuits en procédant à la cuisson des mélanges suivants ayant tous une matière sèche initiale voisine de 75% :
- un premier mélange composé en sec de 70% de lactitol et de 30% de polydextrose hydrogéné d'un poids moléculaire de 800 daltons (produit commercialisé par la société Pfizer),
- un second mélange, conforme à l'invention, composé en sec de 70% de lactitol et de 30% d'une dextrine hydrogénée d'un poids moléculaire de 4500 daltons.

Ces deux mélanges sont cuits à feu nu, à une température de 155°C de manière à obtenir des sucres cuits contenant 3,5% d'eau résiduelle.

Les sucres cuits ainsi préparés sont analysés sur le plan de leur teneur en eau et de leur température de transition vitreuse. Par ailleurs, des tests de stabilité sont réalisés en mettant les sucres cuits sans emballages individuels en microclimat à 66% d'humidité relative et à 20°C pendant 10 jours. A l'issue de cette période, les sucres cuits sont observés en notant leur déformation, leur collant et leur état de cristallisation (grainage). L'échelle de notation est la suivante :
0 : absence
+ : traces
++ : important
+++ : très important

Les résultats des tests de stabilité obtenus sont rassemblés dans le tableau 3 qui suit.

**TABLEAU 3**

| | Teneur en eau | Tg (C°) | Déformation | Collant | Grainage |
|---|---|---|---|---|---|
| Mélange 1 | 3,6 | 49,4 | + | + | +++ |
| Mélange 2 | 3,0 | 45 | 0 | 0 | ++ |

Les sucres cuits préparés à partir du second mélange conforme à la présente invention ne sont jamais collants et ne se déforment pas. Ils sont donc susceptibles d'être vendus nus, non papillotés.

Ces mêmes sucres cuits grainent moins vite que les sucres cuits à base de lactitol et de polydextrose.

### EXEMPLE 3 :

On prépare plusieurs sucres cuits en procédant à la cuisson des mélanges suivants ayant tous une matière sèche initiale voisine de 75% :
- un premier mélange, conforme à l'invention, composé en sec de 30% de maltotriitol et de 70% de glucopyranosido-1,6-mannitol (GPM),
- un deuxième mélange, conforme à l'invention, composé en sec de 50% de maltotriitol et de 50% de GPM,
- un troisième mélange (témoin), composé en sec de 100% d'isomalt.

Ces trois mélanges sont cuits à feu nu, à une température de 180°C de manière à obtenir des sucres cuits.

Les sucres cuits ainsi préparés sont analysés sur le plan de leur teneur en eau et de leur température de transition vitreuse. Par ailleurs, des tests de stabilité sont réalisés en mettant les sucres cuits sans emballages individuels en microclimat à 66% d'humidité relative et à 20°C pendant 10 jours. A l'issue de cette période, les sucres cuits sont observés en notant leur déformation, leur collant et leur état de cristallisation (grainage). L'échelle de notation est la suivante :
0 : absence
+ : traces
++ : important
+++ : très important

Les résultats des tests de stabilité obtenus sont rassemblés dans le tableau 4 qui suit.

**TABLEAU 4**

| | Teneur en eau | Tg (C°) | Déformation | Collant | Grainage |
|---|---|---|---|---|---|
| Mélange 1 | 2,1 | 53,8 | 0 | 0 | + |
| Mélange 2 | 2,3 | 52,9 | 0 | 0 | + |
| Mélange 3 | 2,0 | 49,0 | 0 | 0 | ++ |

Les sucres cuits préparés à partir d'une composition conforme à l'invention comprenant de 30 à 50% de maltotriitol sur sec et de 70 à 50% de glucopyranosido-1,6-mannitol ont un aspect semblable à celui des sucres cuits à base d'isomalt : aucun collage et aucune déformation.

## Revendications

1. Composition édulcorante **caractérisée par le fait qu'**elle comprend :
(a) au moins un composé peu soluble ayant une solubilité dans l'eau inférieure à 60 g / 100 g de solution à 20°C, choisi dans le groupe constitué par les sucres et les polyols, seuls ou en mélange entre eux ; et
(b) au moins un agent anticristallisant comprenant une coupe d'au moins un oligosaccharide ou polysaccharide choisi dans le groupe constitué par les hydrolysats d'amidon de poids moléculaire compris entre 500 et 8000 daltons et présentant une température de transition vitreuse inférieure à 140°C à 0% d'eau et les pyrodextrines et les polyglucoses de poids moléculaire compris entre 1000 et 8000 daltons, seuls ou en mélange entre eux.

2. Composition selon la revendication 1, **caractérisée par le fait que** les pyrodextrines ou les polyglucoses ont un poids moléculaire compris entre 1000 et 6000, de préférence compris entre 2000 et 5000, plus particulièrement compris entre 4000 et 5000 daltons.

3. Composition selon la revendication 1 ou 2, **caractérisée par le fait que** l'agent anticristallisant est hydrogéné et / ou oxydé.

4. Composition selon l'une quelconque des revendications 1 à 3, **caractérisée par le fait que** le composé peu soluble est choisi dans le groupe constitué par le tréhalose, le lactose, le mannose, le maltose, l'érythritol, le mannitol, le glucopyranosido-1, 6-mannitol et le lactitol.

5. Composition selon l'une quelconque des revendications 1 à 4, **caractérisée par le fait que** le rapport pondéral agent anticristallisant / composé peu soluble est compris entre 10/90 et 90/10, de préférence compris entre 20/80 et 80/20.

6. Composition selon l'une quelconque des revendications 1 à 5, **caractérisée par le fait qu'**elle comprend de 25 à 35% en poids sur sec de mannitol et de 65 à 75% en poids sur sec d'une coupe de dextrines hydrogénées.

7. Composition selon l'une quelconque des revendications 1 à 5, **caractérisée par le fait qu'**elle comprend de 65 à 75% en poids sur sec de lactitol et de 25 à 35% en poids sur sec d'une coupe de dextrines hydrogénées.

8. Composition selon l'une quelconque des revendications 1 à 5, **caractérisée par le fait qu'**elle comprend de 40 à 80% en poids sur sec de glucopyranosido-1, 6-mannitol et de 20 à 60% en poids sur sec de maltotriitol.

9. Utilisation d'une composition conforme à l'une quelconque des revendications 1 à 8 pour la fabrication d'un sucre cuit.

10. Utilisation d'une composition conforme à l'une quelconque des revendications 1 à 8 en tant que support d'arôme.

## Patentansprüche

1. Süßmittelzusammensetzung, **dadurch gekennzeichnet, daß** sie folgendes umfaßt:
a) mindestens eine schwach lösliche Verbindung mit einer Wasserlöslichkeit von weniger als 60 g / 100 g Lösung bei 20°C, die aus der Gruppe ausgewählt ist, die aus Zuckern und Polyolen allein oder aus Mischungen davon besteht; und
b) mindestens ein Antikristallisationsmittel, das mindestens ein Oligosaccharid oder Polysaccharid umfaßt, das aus der Gruppe ausgewählt ist, die aus Stärkehydrolysaten mit einem Molekulargewicht zwischen 500 und 8000 Dalton, die eine Glasübergangstemperatur unter 140°C bei 0% Wasser besitzen, und Pyrodextrinen und Polyglucosen mit einem Molekulargewicht zwischen 1000 und 8000 Dalton allein oder in gegenseitiger Mischung besteht.

2. Zusammensetzung nach Anspruch 1, **dadurch gekennzeichnet, daß** die Pyrodextrine oder die Polyglucosen ein Molekulargewicht zwischen 1000 und 6000, vorzugsweise zwischen 2000 und 5000 und insbesondere zwischen 4000 und 5000 Dalton besitzen.

3. Zusammensetzung nach Anspruch 1 oder 2, **dadurch gekennzeichnet, daß** das Antikristallisationsmittel hydriert und/oder oxidiert ist.

4. Zusammensetzung nach einem der Ansprüche 1 bis 3, **dadurch gekennzeichnet, daß** die schwach lösliche Verbindung aus der Gruppe ausgewählt ist, die aus Trehalose, Lactose, Mannose, Maltose, Erythrit, Mannit, Glucopyranosido-1,6-mannit und Lactit besteht.

5. Zusammensetzung nach einem der Ansprüche 1 bis 4, **dadurch gekennzeichnet, daß** das Gewichtsverhältnis von Antikristallisationsmittel / schwach lösliche Verbindung zwischen 10/90 und 90/10, vorzugsweise zwischen 20/80 und 80/20 beträgt.

6. Zusammensetzung nach einem der Ansprüche 1 bis 5, **dadurch gekennzeichnet, daß** sie 25 bis 35 Gew.-% (Trockengewicht) Mannit und 65 bis 75 Gew.-% (Trockengewicht) aus einer Auswahl von hydrierten Dextrinen umfaßt.

7. Zusammensetzung nach einem der Ansprüche 1 bis 5, **dadurch gekennzeichnet, daß** sie 65 bis 75 Gew.-% (Trockengewicht) Lactit und 25 bis 35 Gew.-% (Trockengewicht) aus einer Auswahl von hydrierten Dextrinen umfaßt.

8. Zusammensetzung nach einem der Ansprüche 1 bis 5, **dadurch gekennzeichnet, daß** sie 40 bis 80 Gew.-% (Trockengewicht) Glucopyranosido-1,6-mannit und 20 bis 60 Gew.-% (Trockengewicht) Maltotriitol umfaßt.

9. Verwendung einer Zusammensetzung nach einem der Ansprüche 1 bis 8 für die Herstellung von Bonbonmasse.

10. Verwendung einer Zusammensetzung nach einem der Ansprüche 1 bis 8 in Form eines Aromaträgers.

## Claims

1. A sweetening composition **characterised in that** it comprises:
a) at least one not very soluble compound with a solubility in water of less than 60 g per 100 g of solution at 20°C, chosen from the group consisting of sugars and polyols, individually or as a mixture thereof; and
b) at least one anti-crystallising agent comprising a fraction of at least one oligosaccharide or polysaccharide chosen from the group consisting of starch hydrolysates with a molecular weight in the range 500 to 8000 Daltons and having a glass transition temperature of less than 140°C at a water content of 0% and pyrodextrins and polyglucoses with a molecular weight in the range 1000 to 8000 Daltons, individually or as a mixture thereof.

2. A composition according to Claim 1, **characterised in that** the pyrodextrins or polyglucoses have a molecular weight in the range 1000 to 6000, preferably in the range 2000 to 5000, in particular in the range 4000 to 5000 Daltons.

3. A composition according to Claim 1 or 2, **characterised in that** the anti-crystallising agent is hydrogenated and/or oxidised.

4. A composition according to any one of Claims 1 to 3, **characterised in that** the not very soluble compound is chosen from the group consisting of trehalose, lactose, mannose, maltose, erythritol, mannitol, glucopyranodiso-1,6-mannitol and lactitol.

5. A composition according to any one of Claims 1 to 4, **characterised in that** the ratio by weight of anti-crystallising agent / not very soluble compound is between 10/90 and 90/10, preferably between 20/80 and 80/20.

6. A composition according to any one of Claims 1 to 5, **characterised in that** it comprises 25 wt.% to 35 wt.% on a dry basis of mannitol and 65 wt.% to 75 wt.% on a dry basis of a fraction of hydrogenated dextrins.

7. A composition according to any one of Claims 1 to 5, **characterised in that** it comprises 65 wt.% to 75 wt.% on a dry basis of lactitol and 25 wt.% to 35 wt.% on a dry basis of a fraction of hydrogenated dextrins.

8. A composition according to any one of Claims 1 to 5, **characterised in that** it comprises 40 wt.% to 80 wt.% on a dry basis of glucopyranosido-1,6-mannitol and 20 wt.% to 60 wt.% on a dry basis of maltotriitol.

9. Use of a composition according to any one of Claims 1 to 8 for the manufacture of a boiled sugar.

10. Use of a composition according to any one of Claims 1 to 8 as a flavouring carrier.
